Europäisches Patentamt

European Patent Office

Office européen des brevets

(11) Veröffentlichungsnummer: **0 058 328**
**A1**

(12) **EUROPÄISCHE PATENTANMELDUNG**

(21) Anmeldenummer: **82100672.3**

(22) Anmeldetag: **30.01.82**

(51) Int. Cl.³: **C 08 L 25/00**
**C 08 L 71/04**

(30) Priorität: **14.02.81 DE 3105447**

(43) Veröffentlichungstag der Anmeldung:
**25.08.82 Patentblatt 82/34**

(84) Benannte Vertragsstaaten:
**BE DE FR GB NL**

(71) Anmelder: BASF Aktiengesellschaft
Carl-Bosch-Strasse 38
D-6700 Ludwigshafen(DE)

(72) Erfinder: Brandstetter, Franz, Dr.
Ritterbuechel 45
D-6730 Neustadt(DE)

(72) Erfinder: Muench, Volker, Dr.
Luitpoldstrasse 114
D-6700 Ludwigshafen(DE)

(72) Erfinder: Naarmann, Herbert, Dr.
Haardtblick 15
D-6719 Wattenheim(DE)

(72) Erfinder: Penzien, Klaus, Dr.
Bensheimer Ring 18
D-6710 Frankenthal(DE)

(54) Selbstverlöschende thermoplastische Formmassen.

(57) Selbstverlöschende thermoplastische Formmassen, die ein Polymerisat einer vinylaromatischen Verbindung, einen Polyphenylenether, Polyphospholinoxid und - gegebenenfalls - übliche Zusatzstoffe enthalten.

EP 0 058 328 A1

BASF Aktiengesellschaft                    O.Z. 0050/034942

"Selbstverlöschende thermoplastische Formmassen

Die Erfindung betrifft selbstverlöschende thermoplastische Formmassen, enthaltend

A)    100 Gewichtsteile wenigstens eines Polymerisats einer vinylaromatischen Verbindung, insbesondere eines Styrolpolymerisats,

B)    40 bis 400 Gewichtsteile eines Polyphenylenethers,

C)    5 bis 15 Gewichtsteile einer phosphorhaltigen Verbindung, sowie

D)    - gegebenenfalls - übliche Zusatzstoffe in·wirksamen Mengen,

die nach Entzündung mit einer heißen Flamme in wenigen Sekunden verlöschen und nichtbrennend abtropfen.

Thermoplastische Formmassen, die sich zur Herstellung von Formteilen eignen, die schlagfest modifizierte Styrolpolymerisate und Polyphenylenether enthalten und selbstverlöschend sind, sind z.B. aus der DE-AS 20 37 510 und der US-PS 3 809 729 bekannt. Diese Formmassen enthalten zur Flammfestausrüstung sowohl eine aromatische Phosphorkomponente als auch eine aromstische Halogenverbindung. Zwar werden auch ohne Zusatz von Halogenverbindungen unter Verwendung von aromatischen Phosphaten selbstverlöschende Formmassen erhalten, diese besitzen aber eine wesentlich verschlechterte Wärmeformbeständigkeit. Aufgrund der korrosiv wirkenden Verbrennungsgase bei Einsatz von halogenhaltigen Substanzen sind aber halogenfreie selbstverlöschende Formmassen erstrebenswert.

vG/P

Der vorliegenden Erfindung lag daher die Aufgabe zugrunde, thermoplastische Formmassen auf der Grundlage von Styrolpolymerisaten und Polyphenylenethern zu schaffen, die nach Entzündung mit einer heißen Flamme in wenigen Sekunden verlöschen, nichtbrennend abtropfen, halogenfrei Flammschutzzusätze enthalten und eine hohe Wärmeformbeständigkeit besitzen.

Diese Aufgabe wird erfindungsgemäß gelöst durch Formmassen, die als Flammschutzzusatz Polyphospholinoxid enthalten.

Gegenstand der Erfindung sind dementsprechend selbstverlöschende thermoplastische Formmassen, enthaltend

A) 100 Gewichtsteile wenigstens eines Polymerisats einer monovinylaromatischen Verbindung, insbesondere eines Styrolpolymerisats, und vor allem eines schlagfest modifizierten Styrolpolymerisats,

B) 40 bis 400, insbesondere 65 bis 240 Gewichtsteile eines Polyphenylenethers,

C) 5 bis 15, insbesondere 7 bis 10 Gewichtsteile einer phosphorhaltigen Verbindung, sowie

D) - gegebenenfalls - übliche Zusatzstoffe in wirksamen Mengen.

Die erfindungsgemäßen Formmassen sind dadurch gekennzeichnet, daß die phosphorhaltige Verbindung Phospholinoxid ist.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als

Granulat vorliegen, sie können aber auch pulverförmig oder durch Tablettierung vorgeformt oder in Form von Platten und Bahnen vorliegen.

Die Komponente A) der erfindungsgemäßen Formmassen soll wenigstens ein Polymerisat einer monovinylaromatischen Verbindung sein, wobei bis zu 40 Gew.% an Styrol durch andere Comonomere ersetzt sein können. Als monovinylaromatische Verbindungen kommen dabei insbesondere Styrol in Betracht, ferner die Kern- oder Seitenketten-alkylierten Styrole. Vorzugsweise wird aber Styrol allein verwendet. Als Comonomere kommen beispielsweise Acrylnitril, Maleinsäureanhydrid und Ester der Acrylsäure bzw. Methacrylsäure in Frage. Es können auch mehrere Comonomere gleichzeitig verwendet werden. Bei der Komponente A) kann es sich aber auch um schlagfest modifiziertes Polystyrol handeln.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielswiese in der US-PS 2 862 906 beschrieben sind. Selbstverständlich sind auch andere Verfahren anwendbar.

Als Kautschuke werden die üblicherweise für die Schlagfestmodifizierung von Styrolpolymerisaten gebrächlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt, der zwischen 25 und 98 liegt.

Als Komponente B) kommen Polyphenylenether auf der Basis von in ortho-Position disubstituierten Polyphenylenoxiden in Frage, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein $\alpha$-ständiges tertiäres Wasserstoffatom besitzen, Halogenkohlenwasserstoffe, Phenylreste und Kohlenwasserstoff-oxi--Reste tragen. So kommen in Frage: Poly(2,6-dichlor-1,4--phenylen)ether, Poly(2,6-diphenyl-1,4-phenylen)ether, Poly(2,6-dimethoxy-1,4-phenylen)ether, Poly(2,6-dimethyl--1,4-phenylen)ether, Poly(2,6-dibrom-1,4-phenylen)ether. Bevorzugterweise wird der Poly(2,6-dimethyl-1,4-phenylen)-ether eingesetzt. Besonders bevorzugt sind dabei Poly(2,6-dimethyl-1,4-phenylen)ether mit einer Grenzviskosität von 0,40 bis 0,65 dl/g (gemessen in Chloroform bei 30°C).

Die Polyphenylenether können z.B. in Gegenwart von komplexbildenden Mitteln wie Kupferbromid und Dibutylamin aus den Phenolen hergestellt werden.

Die Komponente C) ist Polyphospholinoxid. Diese Verbindung entsteht beispielsweise bei der Herstellung von pentacyclischen, ungesättigten Phosphindihalogeniden, wie es beispielsweise in der DE-OS 20 36 173 beschrieben ist. Das Molekulargewicht, gemessen durch Dampfdruck osmometrie in Dimethylformamid, der erfindungsgemäß verwechselbaren Polyphospholinoxide soll im Bereich von 500 - 7000, vorzugsweise im Bereich von 700 - 2000 liegen.

0058328

Man stellt die erfindungsgemäßen thermoplastischen Formmassen wie üblich auf Vorrichtungen, die ein homogenes Mischen zulassen, wie Knetern, Extrudern oder Walzenmischgeräten her.

Neben der Eigenschaft der Selbstverlöschung, besitzen die erfindungsgemäßen Formmassen noch eine hohe Wärmeformbeständigkeit.

Die Flammschutzprüfung erfolgt im vertikalen Brandtest nach den Vorschrifen der Underwriter Laboratories zwecks Einordnung in eine der Brandklassen 94 VE-0, 94 VE-1 oder 94 VE-2.

Die Wärmeformbeständigkeit wird nach Vicat nach DIN 53 460/B ermittelt.

Beispiele und Vergleichsversuche

Die in der Tabelle angegebenen Gewichtsteile an Polystyrol, Poly(2,6-dimethyl-1,4-phenylen)ether und an Flammschutzzusatz werden auf einem Zweiwellenextruder bei 300°C geschmolzen, homogenisiert, gemischt und granuliert.

Darstellung von Polyphospholinoxid

448 g Dichlorphenylphosphin werden in 1,5 l Chloroform vorgelegt. 150 g Isopren werden im Laufe von 5 min. unter Rühren bei Zimmertemperatur zugetropft. Nach 5 bis 10 min tritt eine starke Trübung ein, nach 1 Stunde setzt sich eine Festsubstanz an der Kolbenwand ab. Es wird solange bei Zimmertemperatur gerührt, bis der Kolbeninhalt hochviskos geworden ist (ca. 6 Stunden). Man dekantiert einen Teil des Chloroforms ab, und versetzt den Kolbeninhalt mit 1,5 l Methanol und 250 ml Wasser. Die gelbliche Lösung wird 2 Stunden am Rückfluß gekocht. Das Lösungsmittel wird im Vakuum abgezogen. Der Rückstand, Polyphospholinoxid, wird bei 150 bis 250°C im Vakuum von
unreagiertem Dichlorphenylphosphin befreit. Ausbeute:
486 g = 84 %, Molgewicht laut Dampfdruckosmometrie 1030.

Tabelle

| Beispiele | Komponente A Polystyrol (Gewichtsteile) | Komponente B (Poly(2,6-dimethyl-2,4-phenylen)-ether | Komponente C Flammschutz (Gewichtsteile) | | Brandklasse nach UL-94 | Erweichungspunkt nach Vicat (°C) |
|---|---|---|---|---|---|---|
| Beispiele (erfindungsgemäß) | | | | | | |
| 1 | Schlagfest modifiziertes Polystyrol 2) 70 | 30 | Polyphospholinoxid | 6 | VE-2 | 130 |
| 2 | " 60 | 40 | " | 7,5 | VE-1 | 140 |
| 3 | " 50 | 50 | " | 7,5 | VE-1 | 148 |
| 4 | " 50 | 50 | " | 10 | VE-0 | 148 |
| 5 | " 40 | 60 | " | 2,5 | VE-1 | 159 |
| 6 | " 40 | 60 | " | 7,5 | VE-0 | 160 |
| 7 | " 30 | 70 | " | 2,5 | VE-0 | 168 |
| Vergleichsversuche (nicht erfindungsgemäß) | | | | | | |
| C | Schlagfest modifiziertes Polystyrol 2) 60 | 40 | Triphenylphosphat | 5 | VE-1 | 127 |
| D | " 60 | 40 | " | 10 | VE-0 | 115 |
| E | " 50 | 50 | " | 5 | VE-1 | 135 |
| F | " 50 | 50 | " | 10 | VE-0 | 123 |

1) Poly(2,6-dimethyl-1,4-phenylen)ether mit einer Grenzviskosität von 0,46 dl/g (gemessen bei 30°C in Chloroform)

2) Schlagfest modifiziertes Polystyrol mit einem Polybutadiengehalt von 8 Gew.%

Patentanspruch

Selbstverlöschende thermoplastische Formmassen, enthaltend

A)    100 Gewichtsteile wenigstens eines Polymerisats
      einer vinylaromatischen Verbindung,

B)    40 bis 400 Gewichtsteile eines Polyphenylenethers,

C)    5 bis 15 Gewichtsteile einer phosphorhaligen Verbindung, sowie

D)    - gegebenenfalls - übliche Zusatzstoffe in wirksamen
      Mengen,

dadurch gekennzeichnet, daß als phosphorhaltige Verbindung
Polyphospholinoxid verwendet wird.

<div align="right">

**0058328**

Nummer der Anmeldung

</div>

| Europäisches Patentamt | **EUROPÄISCHER RECHERCHENBERICHT** | |
|---|---|---|

EP 82 10 0672

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 855 352 (K. MOEDRITZER) <br> * Ansprüche * <br><br> ----- | 1 | C 08 L 25/00 <br> C 08 L 71/04 |

**RECHERCHIERTE SACHGEBIETE (Int. Cl. ³)**

C 08 L

Der vorliegende Recherchenbericht wurde für alle Patentansprüche erstellt.

| Recherchenort <br> DEN HAAG | Abschlußdatum der Recherche <br> 19-05-1982 | Prüfer <br> FOUQUIER J.P. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03.82